# EUROPEAN PATENT APPLICATION

(11) **EP 4 421 623 A1**
(43) Date of publication of application: **28.08.2024**
(21) Application number: 22883326.5
(22) Date of filing: 30.09.2022
(51) Int. Cl.: G06F 8/65, B60Q 1/04

(54) **VEHICLE SYSTEM**

(30) Priority: 20.10.2021 JP 2021171947
(71) Applicant: KOITO MANUFACTURING CO., LTD., Minato-ku, Tokyo, 108-8711 (JP)
(72) Inventor: SHIBATA Yoshinori, Shizuoka-shi, Shizuoka 424-8764 (JP)
(74) Representative: Cabinet Beau de Loménie
(86) International application number: PCT/JP2022/036827
(87) International publication number: WO 2023/068019

(57) **Abstract**

This vehicle system (1) comprises: an update control unit (211) for controlling updating of a light distribution control program (221) using update data (222) acquired via wireless communication; and a restriction unit (212) for restricting light distribution control performed by a light distribution control unit (214), which is capable of controlling the light distribution of a vehicular lighting fixture (200) on the basis of the light distribution control program (221), when updating of the light distribution control program (221) using the update data (222) has failed.

## Description

### TECHNICAL FIELD

The present disclosure relates to a vehicle system.

### BACKGROUND ART

In the field of vehicles such as automatic vehicles, various types of software have been installed along with high functionality. Under such circumstances, attention has been paid to OTA (over the air) technology for remotely updating software using a wireless network as disclosed in Patent Literature 1, for example.

### CITATION LIST

### PATENT LITERATURE

Patent Literature 1: JP2017-199183A

### SUMMARY OF INVENTION

### TECHNICAL PROBLEM

With regard to a program for performing light distribution control of a vehicle lamp, it is conceivable to update the program using an OTA technique as described in Patent Literature 1. However, in this case, if the program update fails due to, for example, occurrence of a failure during the update, an originally unintended incomplete light distribution pattern may be generated.

An object of the present disclosure is to reduce a risk that may occur due to program update using OTA.

### SOLUTION TO PROBLEM

A vehicle system according to a first aspect of the present disclosure includes:
an update control unit configured to control update of a light distribution control program using update data acquired via wireless communication; and
a restriction unit configured to restrict, in a case where the update of the light distribution control program using the update data is failed, light distribution control performed by a light distribution control unit configured to perform the light distribution control of a vehicle lamp based on the light distribution control program.

A vehicle system according to another aspect of the present disclosure includes:
an update control unit configured to control update of a light distribution control program for performing light distribution control of a vehicle lamp using update data acquired via wireless communication; and
a storage unit configured to store data for change configured to change the light distribution control program to a state before update using the update data or to a predetermined state,
in which, in a case where the update of the light distribution control program using the update data is failed, the update control unit is configured to control the light distribution control program to be changed to the state before update or to the predetermined state, based on the data for change.

### ADVANTAGEOUS EFFECTS OF INVENTION

According to the present disclosure, it is possible to reduce a risk that may occur due to program update using OTA.

### BRIEF DESCRIPTION OF DRAWINGS

[FIG. 1] FIG. 1 is a block diagram illustrating an example of a vehicle system according to an embodiment of the present disclosure.
[FIG. 2] FIG. 2 is a flowchart illustrating an example of processing related to the program update according to an embodiment of the present disclosure.
[FIG. 3] FIG. 3 is a flowchart illustrating an example of a modification of the processing illustrated in FIG. 2.

### DESCRIPTION OF EMBODIMENTS

Hereinafter, embodiments of the present disclosure will be described with reference to the drawings. The same or equivalent components and processing shown in the drawings are denoted by the same reference numerals or names, and redundant description thereof will be omitted as appropriate. The embodiments are exemplary only without limiting the invention, and all or combinations of the features described in the embodiments are not necessarily essential to the invention. Further, an order of processing constituting flowcharts described in the present specification is not the same as long as no contradiction or inconsistency occurs in a processing content, and the processes may be executed in parallel.

### (Vehicle System)

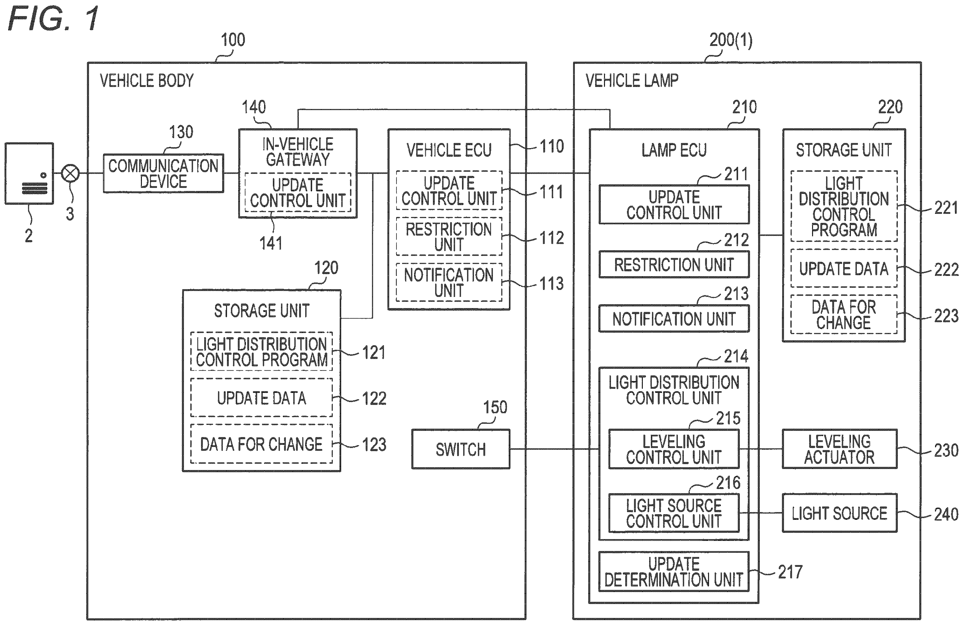

First, a vehicle system according to an embodiment of the present disclosure will be described with reference to FIG. 1. FIG. 1 is a schematic diagram illustrating a vehicle system 1 according to the embodiment of the present disclosure. In the present disclosure, the vehicle system 1 may be implemented by a vehicle lamp 200, may be implemented by a vehicle body 100, or may be implemented by both the vehicle lamp 200 and the vehicle body 100. Hereinafter, a case where the vehicle system 1 is mainly implemented by the vehicle lamp 200 will be described.

The vehicle lamp 200 is a lamp mounted on a vehicle, for example, a front lamp. The vehicle lamp 200 includes a lamp electronic control unit (ECU) 210, a storage unit 220, a leveling actuator 230, and a light source 240.

The storage unit 220 includes, for example, a read only memory (ROM) in which various programs and various data for controlling various operations of the vehicle lamp 200 are stored, and a random access memory (RAM). A processor of the lamp ECU 210 loads data designated from various programs stored in the ROM on the RAM, and controls the various operations of the vehicle lamp 200 in cooperation with the RAM.

In the present embodiment, the storage unit 220 is configured to store a light distribution control program 221, update data 222, and data for change 223. The light distribution control program 221 is a program for causing the lamp ECU 210 to function as a light distribution control unit 214. Although not shown, the storage unit 220 is also configured to store other programs for controlling operations other than light distribution control.

The update data 222 is data for updating the light distribution control program 221. The update data 222 is, for example, data acquired from the computer device 2 via a wireless network 3. In the example of FIG. 1, the update data 222 is first acquired by a communication device 130 mounted on the vehicle body 100, and is transmitted to the vehicle lamp 200 through a gateway 140. The update data 222 is preferably differential data for updating a difference between programs before and after the update, from a viewpoint of reducing a data volume and a communication amount and shortening update time. The communication device and the gateway may be mounted on the vehicle lamp 200, and the vehicle lamp 200 may be configured to directly communicate with the computer device 2 to acquire the update data 222.

The data for change 223 is data for changing the light distribution control program 221 to a state before update using the update data 222 or a predetermined state. Here, the "predetermined state" is, for example, a state after the last two or more update, an initial state, or a state in which the light distribution control can be performed without any other abnormality (for example, a state in which only a basic operation can be performed). One specific example of the "predetermined state" is a state in which only switching between Hi and Lo by a dimmer switch 150 is possible. The data for change 223 may be data stored as backup data in a case where the update is successful. In a case where the data for change 223 is data for changing the light distribution control program 221 to an initial state or a state in which the light distribution control can be performed without any abnormality, the data for change 223 may be data that is not changed as it is. In a case where the lamp ECU 210 is configured to function as a restriction unit 212, the storage unit 220 may not include the data for change 223.

The lamp ECU 210 is configured to control the various operations of the vehicle lamp 200. The lamp ECU 210 includes a processor such as an application specific integrated circuit (ASIC), a field programmable gate array (FPGA), or a general-purpose central processing unit (CPU).

The lamp ECU 210 functions as an update control unit 211, the restriction unit 212, a notification unit 213, a light distribution control unit 214, and an update determination unit (operation determination unit) 217, by reading the light distribution control program 221 and the other programs stored in the storage unit 220.

The update control unit 211 is configured to control the update of the light distribution control program 221 using the update data 222. For example, the update control unit 211 is configured to start updating the light distribution control program 221, in a case where a predetermined start condition is satisfied after acquiring and using the update data 222. The predetermined start condition is, for example, that a remaining amount of a battery mounted on the vehicle body 100 is a predetermined value or more. By setting such a start condition, it is possible to prevent a situation in which the battery runs out during the update and the update fails. The predetermined start condition may include, for example, that the vehicle is stopped. In a case where the vehicle is stopped, a processing load of the entire vehicle including the processing performed by a vehicle ECU or the like is small, and thus a risk of the update failure of the light distribution control program 221 can be reduced. Further, it is possible to prevent a situation in which the update is failed during traveling of the vehicle and a restriction by the restriction unit 212 to be described later suddenly occurs during traveling.

In a case where the update of the light distribution control program 221 using the update data 222 is failed, the update control unit 211 may be configured to control the light distribution control program 221 to be changed to the state before the update or the predetermined state, based on the data for change 223. With this configuration, even in a case where the update of the light distribution control program 221 is failed, the state is changed to a state before the update or a state in which other normal light distribution control can be performed, so that automatic light distribution control by the light distribution control unit 214 can be performed. In a case where the update control unit 211 is configured as described in this paragraph, the lamp ECU 210 may not include the restriction unit 212.

In a case where the update of the light distribution control program 221 using the update data 222 is failed, the restriction unit 212 restricts the light distribution control performed by the light distribution control unit 214. For example, the restriction unit 212 is configured to prevent the automatic light distribution control performed by the light distribution control unit 214. Examples of the automatic light distribution control include automatic switching between a high beam and a low beam, an adaptive driving beam (ADB), and an adaptive front-lighting system (AFS). For example, the restriction unit 212 is configured to perform restriction such that at least one or more of the automatic light distribution control is invalidated. Preferably, the restriction unit 212 is configured to perform restriction such that all of the automatic light distribution control are invalidated. By providing the restriction unit 212, even in a case where the update of the light distribution control program 221 is failed, it is possible to prevent a situation in which an originally unintended incomplete light distribution pattern is generated. Even in a case where the light distribution control is restricted by the restriction unit 212, for example, manual switching between the high beam and the low beam is possible.

The determination of the success or failure of the update may be performed by including configuration information in a case where the light distribution control program 221 is correctly updated using the update data 222 and by comparing the configuration information with configuration information after the light distribution control program 221 is actually updated. The determination of the success or failure of the update may be performed using a known technique in the related art such as cyclic redundancy check (CRC).

The notification unit 213 is configured to output a signal for notifying a user of the vehicle that the update of the light distribution control program 221 is failed. The signal output by the notification unit 213 is transmitted to, for example, an in-vehicle display or an in-vehicle speaker, and the user is notified that the update is failed through an image or a sound. Further, a configuration in which a portable terminal owned by the user of the vehicle is notified of the failure of the update, based on the signal output by the notification unit 213 using wireless communication may be adopted.

The light distribution control unit 214 is configured to perform the light distribution control of the vehicle lamp 200, based on the light distribution control program 221. The light distribution control unit 214 may be configured to perform, for example, the above-described automatic light distribution control. The light distribution control unit 214 includes a leveling control unit 215 and a light source control unit 216. The leveling control unit 215 is configured to control the operation of the leveling actuator 230. The light source control unit 216 is configured to control turning on and off of the light source 240. Although not shown, there are a plurality of light sources 240.

In a case where the update of the light distribution control program 221 is successful, the update determination unit 217 determines whether the light distribution control performed by the light distribution control unit 214 based on the updated light distribution control program 221 is normal. A method of determining whether the light distribution control is normal is not particularly limited, and for example, the determination may be performed based on an image obtained by capturing a light distribution test pattern irradiated by the vehicle lamp 200 based on the updated light distribution control program 221. Specifically, whether the light distribution control is normal may be determined by capturing an image of the light distribution test pattern irradiated by the vehicle lamp 200 with a camera (not shown) mounted on the vehicle body 100, and by comparing the captured image with collation data. The light distribution test pattern is, for example, a preset test light distribution pattern. Such a determination method is preferably performed at night, for example, from a viewpoint that the light distribution test pattern can be clearly captured.

In the method of determining whether the light distribution control is normal, whether the light distribution control performed by the light distribution control unit 214 is normal may be determined, based on a current value of each light source 240 in a case where the vehicle lamp 200 emits the light distribution test pattern based on the light distribution control program 221. This determination method is advantageous in that, for example, the determination can be accurately performed not only during nighttime but also during daytime.

The determination of whether the light distribution control is normal preferably includes a leveling test and a swivel test. Specifically, it is preferable to include determining whether the light distribution control is normal based on a voltage value of the leveling actuator 230 or a swivel actuator (not shown) in a case where leveling or swivel is executed for the preset test pattern.

Even in a case where the update of the light distribution control program 221 is successful, if the update data 222 itself is falsified, there is a risk that originally unintended light distribution control is executed. In the present embodiment, the above-described risk is reduced by providing the update determination unit 217. A timing at which the update determination unit 217 performs determination is not particularly limited, but is preferably a timing at which the vehicle is stopped after the update of the light distribution control program 221. The timing at which the update determination unit 217 performs the determination is preferably a timing until the light distribution control during traveling is performed.

The vehicle body 100 includes a vehicle ECU 110, a storage unit 120, the communication device 130, the gateway 140, and the dimmer switch 150. The vehicle ECU 110 is configured to control various operations of the entire vehicle by reading various programs and various data stored in the storage unit 120. The vehicle ECU 110 includes a processor such as an ASIC, an FPGA, or a general-purpose CPU.

The storage unit 120 includes, for example, a ROM and a RAM in which various programs and various data for controlling the various operations of the vehicle lamp 200 are stored. The processor of the vehicle ECU 110 loads data designated from the various programs stored in the ROM on the RAM, and controls various operations of the vehicle body 100 in cooperation with the RAM.

The communication device 130 is a device configured to perform wireless communication with an outside of the vehicle body 100 via the wireless network 3. In the present embodiment, the communication device 130 is configured to perform communication connection with the computer device 2 that is a server configured to distribute the update data 222 by OTA. Various data received by the communication device 130 is transmitted to a place where the data is required through the gateway 140. The dimmer switch 150 is a switch for the user of the vehicle to manually switch between the high beam and the low beam.

In a case where the vehicle system 1 is implemented by the vehicle body 100, or both the vehicle lamp 200 and the vehicle body 100, the vehicle ECU 110 may be configured to function as an update control unit 111, a restriction unit 112, and a notification unit 113 instead of or in addition to the update control unit 211, the restriction unit 212, and the notification unit 213. Similarly, the gateway 140 may be configured to function as an update control unit 141. Similarly, instead of or in addition to the light distribution control program 221, the update data 222, and the data for change 223, the storage unit 120 may be configured to store a light distribution control program 121, update data 122, and data for change 123.

### (Operation Example)

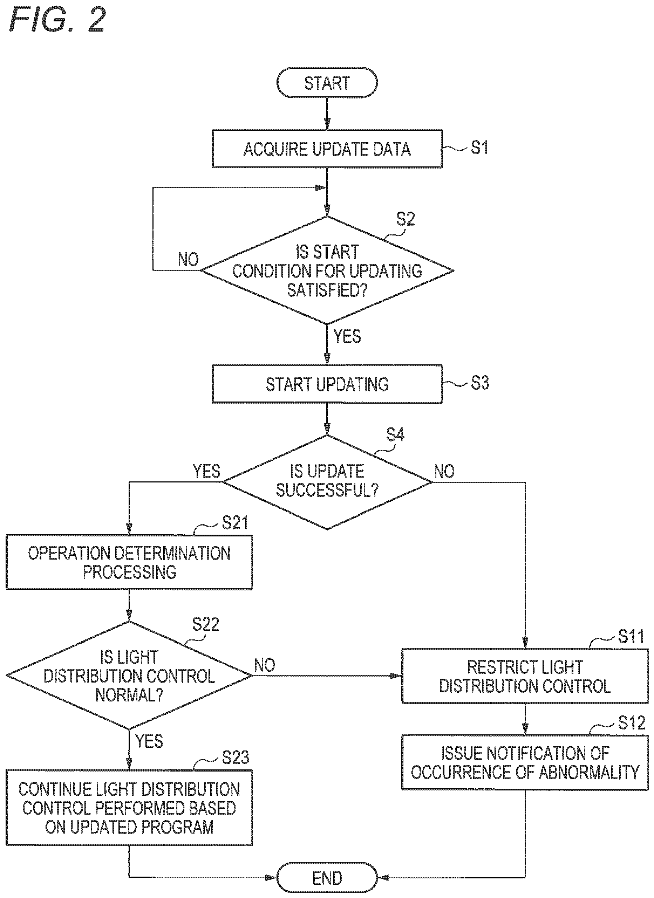

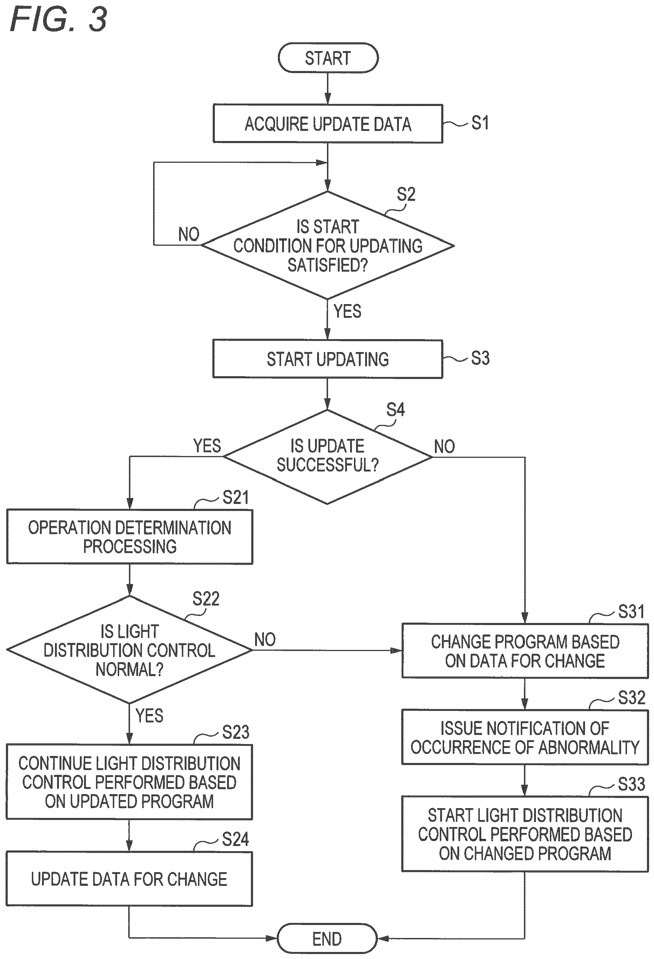

Next, an operation example of the vehicle system 1 will be described with reference to FIGS. 2 and 3. FIG. 2 is a flowchart illustrating an example of processing related to program update according to an embodiment of the present disclosure. FIG. 2 illustrates an example in which the data for change 223 is not used.

First, in step S1, the lamp ECU 210 acquires the update data 222. An acquisition path of the update data 222 is as described above. Next, in a case where the start condition for updating is satisfied (Yes in step S2), in step S3, the lamp ECU 210 updates the light distribution control program 221 using the update data 222. As the start condition for updating, for example, one or more start conditions described above may be adopted. In a case where the start condition for updating is not satisfied (No in step S2), the update of the light distribution control program 221 is not executed until the start condition is satisfied.

In a case where the update of the light distribution control program 221 is failed (No in step S4), in step S11, the lamp ECU 210 restricts the automatic light distribution control of the vehicle lamp 200. In the present embodiment, the lamp ECU 210 is configured to perform restriction to only allow manual switching by the dimmer switch 150. This restriction is released, for example, in a case where update work is executed again and the update is successful.

In step S12, the lamp ECU 210 outputs a signal for issuing a notification that the update of the light distribution control program 221 is failed. For example, based on the signal, the vehicle ECU 110 is configured to cause the in-vehicle display or the in-vehicle speaker to output an image or sound for indicating that the update is failed, and is configured to prompt the user of the vehicle to perform an operation of executing update processing again.

In a case where the update of the light distribution control program 221 is successful (Yes in step S4), in step S21, the lamp ECU 210 determines whether the light distribution control performed based on the updated light distribution control program 221 is normal. As the determination method in step S21, for example, one or more of the above-described determination methods can be adopted. The timing at which the determination in step S21 is performed is also one of the above-described timings.

In a case where it is determined that the light distribution control is normal (Yes in step S22), the light distribution control performed based on the updated light distribution control program 221 is continued in step S23, and the processing ends. On the other hand, in a case where it is determined that the light distribution control is not normal (No in step S22), the processing proceeds to step S11, and the automatic light distribution control performed based on the updated light distribution control program 221 is restricted. In this case, in step S12, the lamp ECU 210 outputs a signal for issuing a notification that the update data 222 is not appropriate data. Further, in a case where the light distribution control program 221 is updated using the appropriate update data 222, the restriction on the light distribution control in step S11 is released.

Next, a modification of the processing shown in FIG. 2 will be described. FIG. 3 is a flowchart illustrating an example of the modification of the processing illustrated in FIG. 2. FIG. 3 illustrates an example in which the data for change 223 is used. In the example of FIG. 3, the lamp ECU 210 may not function as the restriction unit 212.

In FIG. 3, steps S1 to S4 are similar to those in FIG. 2, and a description thereof is omitted. In the example of FIG. 3, in a case where the update of the light distribution control program 221 is failed (No in step S4), the lamp ECU 210 changes the light distribution control program 221 using the data for change 223 in step S31.

Further, in step S32, the lamp ECU 210 outputs a signal for issuing a notification that the update of the light distribution control program 221 is failed. For example, based on the signal, the vehicle ECU 110 is configured to cause the in-vehicle display or the in-vehicle speaker to output an image or sound for indicating that the update is failed, and is configured to prompt the user of the vehicle to perform an operation of executing update processing again. Further, it is preferable that the lamp ECU is configured to output a signal for issuing a notification of a current state of the light distribution control program (for example, information indicating what kind of light distribution control is possible, version information capable of specifying the light distribution control program after change, or the like).

In step S33, the lamp ECU 210 starts the light distribution control performed based on the changed light distribution control program 221 in step S31. The light distribution control is continued until the update data 222 is normally updated, for example. After step S32, similarly to step S4, it may be determined whether the change has been made normally. Further, in a case where it is determined that the change is normal, the processing may proceed to step S21, and in a case where it is determined that the change is not normal, the processing may proceed to step S11 of FIG. 2.

In a case where the update of the light distribution control program 221 is successful (Yes in step S4), the processing proceeds to step S21. The processing of steps S21 to S23 in FIG. 3 are similar to those in FIG. 2, and a description thereof is omitted. In the example of FIG. 3, in step S24, the lamp ECU 210 updates the data for change 223 using the update data 222. The updated data for change 223 is used, for example, in a case where the next update of the light distribution control program 221 is failed.

In the description of FIGS. 2 and 3, each type of processing performed by the lamp ECU 210 may be performed by the vehicle ECU 110 or the gateway 140 as long as no contradiction occurs. Further, all of the processing are not essential, and some of the processing may not be executed.

The present application is based on a Japanese patent application No. 2021-171947 filed on October 20, 2021, and the contents thereof are incorporated herein by reference.

## Claims

1. A vehicle system comprising:
an update control unit configured to control update of a light distribution control program, using update data acquired via wireless communication; and
a restriction unit configured to restrict, in a case where the update of the light distribution control program using the update data is failed, light distribution control performed by a light distribution control unit configured to perform the light distribution control of a vehicle lamp based on the light distribution control program.

2. A vehicle system comprising:
an update control unit configured to control update of a light distribution control program for performing light distribution control of a vehicle lamp, using update data acquired via wireless communication; and
a storage unit configured to store data for change configured to change the light distribution control program to a state before update using the update data or to a predetermined state,
wherein, in a case where the update of the light distribution control program using the update data is failed, the update control unit is configured to control the light distribution control program to be changed to the state before update or to the predetermined state, based on the data for change.

3. The vehicle system according to claim 1 or 2, further comprising:
a notification unit configured to output a signal for notifying a user of a vehicle that the update of the light distribution control program is failed.

4. The vehicle system according to claim 1 or 2,
wherein, in a case where a remaining amount of a battery of a vehicle is equal to or greater than a predetermined value, the update control unit is configured to perform control to update the light distribution control program.

5. The vehicle system according to claim 1 or 2, further comprising:
a light distribution control unit configured to perform light distribution control of the vehicle lamp, based on the light distribution control program; and
an operation determination unit configured to determine, in a case where the update of the light distribution control program is successful, whether the light distribution control performed by the light distribution control unit based on the updated light distribution control program is normal.

6. The vehicle system according to claim 5,
wherein the operation determination unit is configured to determine whether the light distribution control performed by the light distribution control unit is normal, based on an image obtained by capturing a light distribution test pattern irradiated by the vehicle lamp based on the updated light distribution control program.

7. The vehicle system according to claim 5,
Wherein the determination by the operation determination unit includes determining whether the light distribution control performed by the light distribution control unit is normal, based on a current value of each light source provided in the vehicle lamp in a case where the vehicle lamp irradiates a light distribution test pattern based on the light distribution control program.
